# EUROPEAN PATENT APPLICATION

(11) **EP 2 600 272 A2**
(43) Date of publication of application: **05.06.2013**
(21) Application number: 11812701.8
(22) Date of filing: 24.06.2011
(51) Int. Cl.: G06F 21/20

(54) **HACKER VIRUS SECURITY-INTEGRATED CONTROL DEVICE**

(30) Priority: 26.07.2010 KR 20100071918
(71) Applicant: Kim, Ki Yong, Seoul 142-815 (KR)
(72) Inventor: Kim, Ki Yong, Seoul 142-815 (KR)
(74) Representative: Lord, Michael
(86) International application number: PCT/KR2011/004624
(87) International publication number: WO 2012/015171

(57) **Abstract**

A hacker virus security-integrated control device is provided. The hacker virus security-integrated control device is separately operated by implementing existing security programs for viruses, malicious spyware and cloaker programs as an embedded device that is integrated hardware, Thus, the hacker virus security-integrated control device can protect computers and external storage devices from malicious programs that may infect data transmitted from Internet, data transmitted between the computers and data in the external storage devices by implementing, as integrated hardware, a protection and disinfection program for various malicious programs, a protection and disinfection program for spyware, a defense programs for cloaker's intrusion and a program for actively coping with new malicious programs, etc., so as to defend intrusion of existing malicious programs and perform disinfection on the existing malicious program, to actively cope with newly generated malicious programs, to defend cloakers' malicious access to the computers, and to warn the cloakers of their malicious actions.

## Description

### TECHNICAL FIELD

The present invention relates to a hacker virus security-integrated control device for solving problems that may occur due to viruses, malice programs, etc., using a separate auxiliary device in a security related integrated control system of computers and various devices.

More particularly, the present invention relates to a hacker virus security-integrated control device which can prevent intrusion of viruses and malicious programs from the outside to a computer or delete the intruded viruses and malicious programs using a separate security control system installed inside or outside the computer, actively defend the generation of new viruses by detecting and storing types of existing viruses, and detect the address of a computer that generates the new viruses and then warning the computer of the malicious action.

### BACKGROUND ART

Security programs for virus programs, malicious spyware, cloaker programs, etc. (hereinafter, generally referred to as 'malicious programs') are implemented as software to block intrusion of the malicious programs and to delete or disinfect infected data.

If a computer is infected by a malicious program, the speed of the computer is decreased, and therefore, a user feels difficult in the use of the computer. In a serious case, the computer may not operate correctly. In this case, security programs monitor a malicious program, etc. by operating, in real time, prior to any computer programs. In a case where data is infected due to the intrusion of a malicious program, an operation of disinfecting and deleting the infected data is performed, and therefore, the speed of a computer system is decreased.

In a case where there is an intrusion of a malicious hacker (hereinafter, referred to as a 'cloaker'), the intrusion of the cloaker can be quickly dealt with when there exists a surveillant for monitoring the intrusion of the cloaker at ordinary times, but it is very weak to defense against the intrusion of the cloaker when there exists no surveillant or when the computer is a general personal computer. Accordingly, there may occur a serious leakage of information due to the intrusion of the cloaker, damage of the computer, and distortion of information.

There is no proper control for driving several security programs in one computer in order to protect the computer from intrusion of various malicious programs, and much time and cost is required to install and update the security programs operated in real time.

Further, the several security programs are operated in the driving of the computer, and occupy computer hardware, e.g., a hard disk or memory. Therefore, an error in a program on an operating system occurs due to a collision between programs on the operating system or a collision between security programs. Accordingly, an application program is unavoidably used, the computer does not operate due to the non-operation of the operating system, or a failure of the computer occurs.

Furthermore, in a case where a failure occurs in the computer, there should be considered not only a problem of time and cost used to recover important data stored in the computer when the data is deleted or even when the recovery of the data is possible but also damage of re-installation of programs in the computer.

New malicious programs are created as steady as the term "cyber war" is made. As wire/wireless access to a computer is easily performed with the development of information communication, techniques for hacking are also developed, and therefore, access to other computers is more easily performed. Currently, measures for such problems are not first taken, and therefore, malicious programs corresponding to the problems are created. Accordingly, the problems lie latent, but are not actively solved.

The software approach to malicious programs means that an operating system is operated by driving a computer, and accordingly, a security program is operated. In a case where there occurs a problem of a malicious program on a ROM BIOS capable of performing a write function before the operating system is operated after the driving of the computer or a problem of a program itself, the malicious program is operated in a state in which the computer is defenseless.

### DETAILED DESCRIPTION

### Technical Problems

It is thus an object of the present invention to provide a hacker virus security-integrated control device which can protect computers by implementing, as integrated hardware, a protection and disinfection program for various malicious programs, a protection and disinfection program for spyware, a defense programs for cloaker's intrusion and a program for actively coping with new malicious programs, etc., and building up the integrated hardware as a device embedded in each computer or a separated server system, so as to defend intrusion of existing malicious programs and perform disinfection on the existing malicious program, to actively cope with newly generated malicious programs, to defend cloakers' malicious access to the computers, and to warn the cloakers of their malicious actions.

### Technical Solutions

To solve the objective, the present invention provides

a hacker virus security-integrated control device, including: an integrated transmission device configured to communicate data with an Internet or computer external storage device;

an integrated storage device configured to arbitrarily store data transmitted from the integrated transmission device and store data of which security disinfection is performed from an integrated processing device;

the integrated processing device configured to load data from the integrated storage device and perform security disinfection on the loaded data using a security program;

and a security program storage device configured to provide a security program requested in the integrated processing device.

To solve the objective, the present invention provides a hacker virus security-integrated control device, including:

a display configured to briefly display a current progress status of a system device to a user;

an internet cable connector configured to connect the security-integrated control device to an Internet;

a computer cable connector configured to connect a personal computer or server controlled by the security-integrated control device;

a power button configured to supply power to the security-integrated control device;

a circuit connector configured to receive data a computer and an external storage device, connected to the security-integrated control device, and perform security disinfection on the received data;

and an existing security circuit configured to create a reference security program.

### Advantageous Effects

Based on the above structure, in the hacker virus security-integrated control device according to the present invention, existing security programs for malicious programs are implemented as integrated hardware and are separately operated, so that it is possible to reduce time and cost spent in installing and updating a security program and checking each file, to support more stable and improved speed in the use of a computer operating system or computer program, and to actively and quickly defend and disinfect a new malicious program, thereby solving a problem of additional cost.

### Brief Description of Drawings

FIG. 1 is a front view of a hacker virus security-integrated control device according to an embodiment of the present invention;

FIG. 2 is a rear view of the hacker virus security-integrated control device according to the embodiment of the present invention;

FIG. 3 is a block diagram of a security patch circuit of an operating system according to an embodiment of the present invention;

FIG. 4 is a block diagram of an existing security circuit for malicious programs according to an embodiment of the present invention;

FIG. 5 is a block diagram of a new security circuit for new malicious programs according to an embodiment of the present invention;

FIG. 6 is a block diagram of an external data control circuit according to an embodiment of the present invention;

FIG. 7 is a block diagram of a blocking attack security circuit according to an embodiment of the present invention;

FIG. 8 is a block diagram of an application program analysis circuit according to an embodiment of the present invention; and

FIG. 9 is a block diagram of a security-integrated control circuit according to an embodiment of the present invention.

### Best modes for practicing Invention

Hereinafter, the configuration and operation of a hacker virus security-integrated control device according to an exemplary embodiment of the present invention will be described in detail with reference to the accompanying drawings.

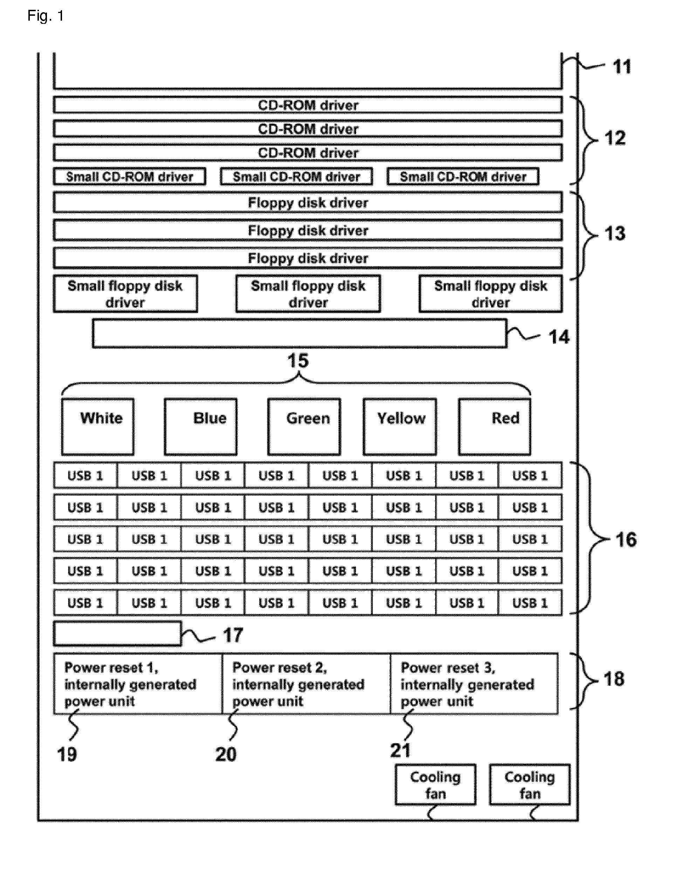

FIG. 1 is a front view of a hacker virus security-integrated control device according to an embodiment of the present invention.

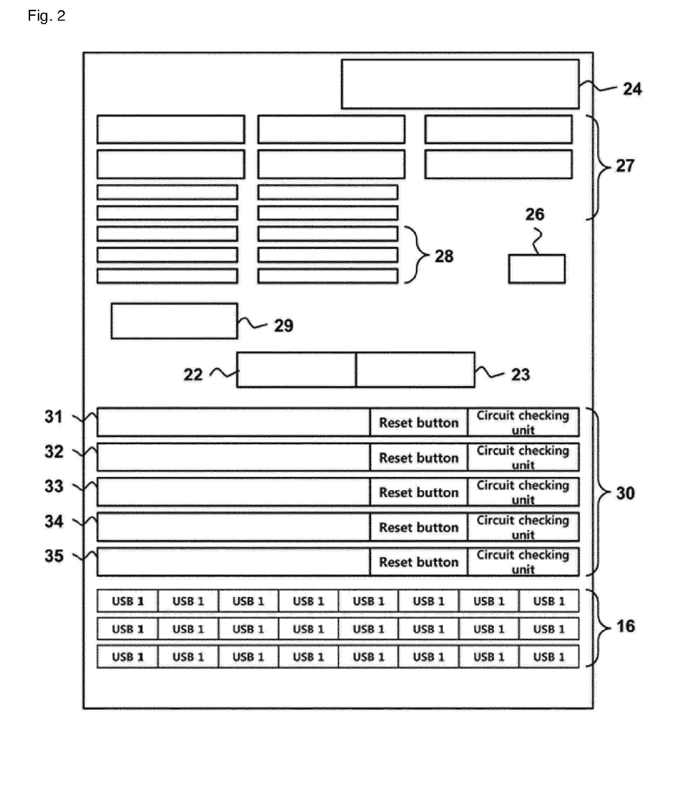

FIG. 2 is a rear view of the hacker virus security-integrated control device according to the embodiment of the present invention.

As shown in FIGS. 1 and 2, the hacker virus security-integrated control device according to the embodiment of the present invention includes a display 11 for briefly explaining the current progress status of a system device to a user at the front of the security-integrated control device, a plurality of CD-ROM drivers 12 for checking external CD-ROMs, a plurality of floppy disk drivers 13 for checking external floppy disks, a progress display means 14 for sequentially displaying the progress situation of an external device, a display lamp 15 for enabling a current progress situation to be distinguished for each color, a plurality of USB drivers 16 for checking external front USBs, a power supply 17 of the security-integrated control device, a power reset for resetting power of the security-integrated control device, a cooling fan 24 for cooling of the entire security-integrated control device, an air supply fan 25 for supplying air to the security-integrated control device, an air exhaust fan 26 for exhausting air from the security-integrated control device, a computer cable connector 27 for connecting the security-integrated control device to an external computer, an Internet cable connector 28 for connecting the security-integrated control device to the Internet, a monitor cable connector 29 for a separate output, and a circuit connection unit 30 to which a circuit for protecting and disinfecting data from computers and external storage devices connected to the security-integrated control device is connected.

The display 11 displays, in real time, a surveillant of information on a progress time elapsed of search, check, disinfection and deletion (hereinafter, referred to as 'security disinfection') for data, currently performed by the security-integrated control device, information on a remaining storage space, information on the existence of malicious programs, which informs the surveillant that malicious programs to be stored in the security-integrated control device so as to disinfect programs do not exist, information on the progress of deletion, disinfection, defense, blocking or attack for a storage device in the computer connected to the security-integrated control device and an external storage device such as a CD-ROM, floppy disk or USB memory, which is performed by the storage device and the security-integrated device, and warning for malicious programs intruded from the outside of the security-integrated control device.

The display 11 displays controls for the devices included in the security-integrated control device so that the surveillant arbitrarily control the security-integrated control device.

The small and large CD-ROM drivers 12 allow CD-ROMs to be loaded therethrough so that the security disinfection is performed on the disinfection of malicious programs existing in the CD-ROMs, using a security program embedded in the security-integrated control device.

When the disinfection and deletion of an infected CD-ROM are impossible, the impossibility of the disinfection and deletion is displayed in the panel-window display 11 so as to disuse the infected CD-ROM. In a case where a malicious program that infects data is necessary, the malicious program is stored in a malicious program storage space and then used when necessary.

The small and large floppy disk drivers 13 allow floppy disks to be loaded therethrough so that the security disinfection is performed on the disinfection of malicious programs existing in the floppy disks.

When the disinfection and deletion of an infected floppy disk is impossible, the impossibility of the disinfection and deletion is displayed in the panel-window display 11 so as to disuse the infected floppy disk. In a case where a malicious program that infects data is necessary, the malicious program is stored in the malicious program storage space and then used when necessary.

The progress display means 14 informs the surveillant of a situation of the security disinfection currently performed by distinguish, for each device, the CD-ROM drivers, floppy disk drivers, CD-ROMs and floppy disks connected to the USBs and the USB memory. When the disinfection and deletion of an infected device, the progress display means 14 displays a warning of encouraging the surveillant to disuse the infected device. In a case where a malicious program that infects data is necessary, the malicious program is stored in the malicious program storage space and then used when necessary.

The display lamp 15 allows the surveillant to distinguish situations for each color so as to briefly display, in real time, progress situations of analysis, disinfection, deletion, defense and attack functions for an operating system patch security program, a security program, a code program, a system device security configuration, a malicious program and an operating program, which are currently performed. The display lamp 15 enables the surveillant to understand a situation currently performed for each device by driving a green display when checking and searching are performed, driving a red display when a malicious program is detected, driving a blue display when the detected malicious program is disinfected, driving a yellow display when data infected by the malicious program is deleted, and driving a white display when it is necessary to store the malicious program.

The colors of the displays may be changed when necessary.

The USB driver 16 allows a USD memory to be loaded therethrough so that the security disinfection is performed on the infection of malicious programs existing in an external storage device used by a general user, such as a USB memory, MP3 memory or cellular phone memory, using the security program embedded in the security-integrated control device.

When the disinfection and deletion of a USB memory is impossible, the impossibility of the disinfection and deletion is displayed in the display 11 so as to disuse the infected USB memory. In a case where a malicious program that infects data is necessary, the malicious program is stored in the malicious program storage space and then used when necessary.

The power supply 17 supplies power to the entire security-integrated control device to be operated. The power supply 17 supplies stable electricity of 110 to 220V. The voltage of the electricity is supplied in a basic situation, and may be changed depending on a place or region. Therefore, a device for constantly maintaining voltage and current and controlling power is required.

The power reset 18 resets the security-integrated control device so as to quickly cope with an electrical error, malfunction, etc., which may occur in the security-integrated control device.

The security-integrated control device further includes an internal power reset 19 for coping with an electrical error of a plurality of malicious program security circuits existing in the security-integrated control device, a collision between the circuits, etc., an external storage device power reset 20 for quickly coping with an error occurring in a driver for an external storage device such as a CD-ROM, an external device power reset 21 for coping with malfunction of a display or progress display that is an external device of the security-integrated control device, an external device connection power reset 22 for resetting a circuit that communicates data between computers, and an Internet connection power reset 23 for resetting a circuit that communicates data between Internets.

The cooling fan 24 maintains a security-integrated control device at a constant temperature by cooling internal heat so as to prevent malfunction of the security circuit and electrical devices due to high-temperature heat generated in the security-integrated control device that operates in real time.

The number and position of cooling fans are preferably determined according to the capacity of the security-integrated control device.

The air supply fan 25 and the air exhaust fan 26 supply external air to the inside of the security-integrated control device when the cooling fan 24 is not driven, and lowers the internal temperature of the security-integrated control device by forcibly exhausting hot air generated by the high-temperature heat generated in the security-integrated control device. The air supply fan 25 and the air exhaust fan 26 circulate and purify air so as to prevent malfunction of several circuits due to fine dusts, which occurs in the security-integrated control device.

The number and position of air supply fans or air exhaust fans are preferably determined when necessary.

The computer cable connector 27 allows the security-integrated control device to be connected to a personal computer or server (hereinafter, generally referred to as a 'computer') controlled by the security-integrated control device. The security-integrated control device operates in real time and performs the security disinfection by connecting the computer to the security-integrated control device through the computer cable connector 27 so as to protect data stored in the computer from malicious programs intruded through external Internet to which the computer is to be connected.

The Internet cable connector 28 allows all computers and servers in an Internet network controlled by the security-integrated control device to be connected to the outside through the security-integrated control device so that the security-integrated control device performs the security disinfection on data transmitted from the Internet network connected to the computers and servers. In a case where a malicious program that infects the data is necessary, the malicious program is stored and then used to defend the malicious program.

The monitor cable connector 29 allows the security-integrated control device to be connected to an output device such as a monitor so that the surveillant can visually identify an operating performance and driving process of the security-integrated control device, a storage space remaining in the security-integrated control device and a state of the currently installed and operated security circuit through the monitor. The security-integrated control device performs a function of monitoring malicious programs, monitoring security programs and checking and correcting internal malfunction from an output screen of the monitor connected to the security-integrated control device through the monitor cable connector 29.

The circuit connection unit 30 individually connects a security patch circuit 31 for patching security of the operating system in the security-integrated control device and the computer connected to the security-integrated control device, an existing security circuit 32 for creating a reference security program, a new security circuit 33 for storing, and analyzing new malicious programs and disinfecting data infected by the malicious programs, an external data control circuit 34 for disinfecting data in an external storage device to be transmitted to the existing security circuit 32 and the new security circuit 33 and then transmitting the disinfected data to the external storage device, a blocking attack security circuit 35 for blocking intrusion of an external intruder, and an application program analysis circuit 36 for analyzing an application program created by a programmer so as to analyze whether or not the malicious programs are included in the data and to warning the surveillant that the malicious programs have been included in the data.

Each circuit includes a circuit reset button for quickly coping with various problems such as a fault and error occurring in each circuit through hardware and separately controlling power of a circuit that the surveillant intends not to use, and a circuit checking unit for checking a state of each circuit.

In a case where malfunction of each circuit occurs, the circuit is preferably implemented in a slot-type circuit to be easily replaced.

The security-integrated control device is preferably divided into a personal security-integrated control device, a general security-integrated control device and a professional security-integrated control device according to its use environment. The security-integrated control devices are connected to the Internet in the same manner. However, the number of external storage devices is about 1 or 2 in the personal security-integrated control device, the number of external storage devices is about 6 in the general security-integrated control device, and the number of external storage devices is about 12 in the professional security-integrated control device, according to the number of computers and external storage devices on which the security-integrated control device is to perform a security control. Therefore, the difference in capacity between processing and storage devices in each security circuit occurs depending on an object to be controlled.

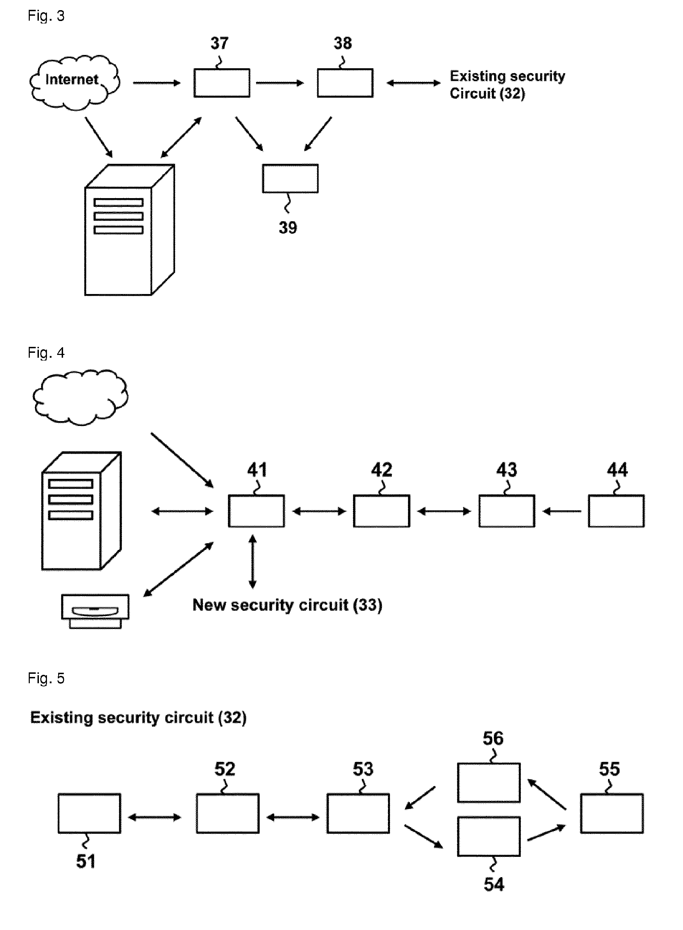

FIG. 3 is a block diagram of the security patch circuit for performing security patch of the operating system according to an embodiment of the present invention.

As shown in FIG. 3, the security patch circuit 31 includes a patch analysis device 37 for analyzing contents of a security patch program, a patch storage device 38 for storing a plurality of patch programs in a plurality of computers, and a patch transmission device 39 for transmitting the patch programs to the existing security circuit 32 so as to perform the security disinfection on malicious programs.

The patch analysis device 37 analyzes a program transmitted from the Internet through the Internet cable connector 28 and decides whether or not the transmitted program is a security patch program of the operating system. In a case were the program is not the security patch program, the patch analysis device 37 deletes the patch program. In a case where the program is the security patch program, the patch analysis device 37 stores the program in the patch storage device 38. If it is decided that a malicious program has been infected in the patch program, the patch analysis device 37 transmits the infected patch program to the patch transmission device 39 that transmits the patch program to the existing security circuit 32 so as to disinfect the infected patch program, and stores the disinfected patch program in the patch storage device 38. The computer receives the safe security patch program transmitted from the patch storage device 38 so as to patch the security of the operating system.

Preferably, in a case where the computer connected to the Internet receives a security patch program of the operating system transmitted from the Internet, the computer first transmits the received security patch program to the patch analysis device 37 to analyze the patch program and then receives a safely checked security patch program transmitted from the patch storage device 38, thereby installing the security patch the safely checked security patch program.

FIG. 4 is a block diagram of the existing security circuit for malicious programs according to an embodiment of the present invention.

The existing security circuit 32 is a circuit that stores a countermeasure program for existing malicious programs in the memory so as to take measures against the malicious programs. The existing security circuit 32 includes an existing transmission device 41 for receiving data transmitted from the computer connected to the computer cable connector 27 or the internet cable connector 28 or data transmitted from the external device control circuit 34 that requests the existing security circuit 32 of the security disinfection and then transmitting the received data to an existing security storage device 42, and transmitting data infected by a malicious program, which is not disinfected in an existing security processing device 43, to the new security circuit 33, the existing security storage device 42 for arbitrarily storing the data transmitted from the existing transmission device 41, the existing security processing device 43 for performing the security disinfection on the data transmitted from the existing security storage device 42, and an existing security program storage device 44 for providing a security program to the existing security processing device 43.

The existing transmission device 41 receives data transmitted from the computer connected to the computer cable connector 27 or the internet cable connector 28 or data transmitted from the external device control circuit 34 that requests the existing security circuit 32 of the security disinfection and then transmitting the received data to the existing security storage device 42. The existing transmission device 41 transmits data infected by a malicious program, which is not disinfected in an existing security processing device 43, to the new security circuit 33 so as to perform the security disinfection on the infected data. Then, the existing transmission device 41 again receives the disinfected data transmitted from the new security circuit 33 so as to transmit the received data to the existing security storage device 42 to store the data or to data processed by a control signal of the existing security processing device 41 to the computer connected to the security-integrated control device or the external storage device control circuit 34.

The existing security storage device 42 arbitrarily stores data transmitted from the existing transmission device 41, stores data obtained by performing the security disinfection on the data infected by the malicious program in the existing security processing device 43, and stores data that is processed in the new security circuit 33 and then transmitted to the existing transmission device 41.

The existing security processing device 43 loads a security program to perform check, search and disinfection on malicious programs from the existing security program storage device 44 in which currently developed virus vaccines, anti-cloaking programs or spyware removal programs (hereinafter, referred to as 'security programs') are stored. In a case where a corresponding malicious program is detected by checking and searching the data transmitted from the existing security storage device 42, the existing security processing device 43 performs the security disinfection on the detected malicious program. In a case where the disinfection of the data infected by the malicious program is impossible, it is necessary to check whether or not new malicious programs exist in the data, and therefore, the existing security processing device 43 transmits the data to the existing transmission device 41 to transmit the data to the new security circuit 33.

The existing security program storage device 44 stores a program for checking and removing programs disguised as vaccine programs that are currently developed by several companies and perform the security disinfection on viruses and programs that remove advertising spyware, and a program for detecting and removing cloaker's actions, particularly, cloaker programs for illegally obtaining programs, certificates, security keys or passwords so as to use other computers as zombie PCs. In a case where the stored program is required in the existing security processing device 43, the existing security program storage device 44 provides the program to be loaded and used by the existing security processing device 43.

FIG. 5 is a block diagram of the new security circuit for new malicious programs according to an embodiment of the present invention.

As shown in FIG. 5, the new security circuit 32 includes a new transmission device 51 for processing data transmitted from the existing transmission device 44 and then retransmitting the processed data to the existing transmission device 44, a new security storage device 52 for storing data that may be infected by new malicious programs in the data transmitted from the new transmission device 51, a new security processing device 53 for performing security processing on the data transmitted from the new security storage device 52, a new malicious program storage device 54 for storing new malicious programs which are not processed in the new security processing device 53, a new analysis device 55 for analyzing the new malicious programs stored in the new malicious program storage device 54, and a new security program storage device 56 for storing new security processing programs for the corresponding malicious programs from the new analysis device 55.

The new transmission device 51 receives data infected by malicious programs, which is not processed in the existing security circuit 31, and transmits the received data to the new security storage device 52 in which the data is arbitrarily stored. The new transmission device 51 receives, from the new security storage device 52, data of which security disinfection on new malicious programs has been completed by the new security processing device 53, and transmits the received data to the existing security circuit 31. The new transmission device 51 transmits new security programs transmitted from the new security program storage device 56 to the blocking attack security circuit 35 in response to a request of the blocking attacking security circuit 35 for the new malicious programs.

The new security storage device 52 transmits doubtful data that may be infected by the new malicious programs transmitted from the new transmission device 51 to the new security processing device 53 to process the data. The new security storage device 52 receives data of security disinfection is performed in the new security processing device 52 and transmits the received data to the new transmission device 51. The new security storage device 52 loads new security programs for the new malicious programs, required in the blocking attack security circuit 35, and transmits the loaded new security programs to the new transmission device 51.

The new security processing device 53 loads a security program for performing security disinfection on malicious programs from the new security program storage device 56 that stores new security programs capable of analyzing and processing the new malicious programs. In a case where a new malicious program that can be disinfected is detected by checking and searching the data transmitted from the new security storage device 52, the new security processing device 53 performs security disinfection on the detected new malicious program. In a case where another new malicious program that cannot be disinfected is detected, the new security processing device 53 stores the detected new malicious program in the new malicious program storage device 54 for the purpose of analysis for the new malicious program.

The data infected by the malicious program that has not been disinfected should not be executed, but there is a case where the data is necessarily executed. Hence, the execution of the data should be decided by a computer user, and therefore, the decision is preferably notified to the computer user through the display 11 and the monitor connected to the monitor cable connector 29.

The new malicious program storage device 54 does not delete doubtful data that may be infected by a new malicious program, which is not processed in the new security processing device 53, and stores the new malicious program so that the new security analysis device 55 can analyze the data and perform security disinfection on the analyzed data for the purpose of the use of the new malicious program in the future.

However, since the disinfection of the data stored in the new malicious program storage device 54 is impossible, the new malicious program storage device 54 does not provide an execution function so that other computers and external storage devices connected to the security-integrated control device are not infected by the executed data, as well as the security-integrated control device.

The new analysis device 55 analyzes whether the new malicious program stored in the new malicious program storage device 54 is a virus program, spyware or cloaker program and its configuration. In a case where the writing of a program that can simply perform security disinfection on the new malicious program is possible, the new analysis device 55 automatically writes the program and stores the written program in the new security program storage device 56. In a case where a specialist's development of a security disinfection program is necessary, the new analysis device 55 provides information on the new malicious program to a specialist so as to assist the specialist in the development of the security disinfection program.

The new security program storage device 56 stores the new security program developed in the new analysis device 55 and the new security program developed by the specialist, and provides the new security programs to the new security processing device 53 when the new security processing device 53 requests the new security program storage device 56 of a program for performing security disinfection on new malicious programs.

In a case where there is a request for a new security program from the blocking attack security circuit 35, the new security processing device 53 loads the new security program stored in the new security program storage device 56 and transmits the loaded new security program to the blocking attack security circuit 35 through the new transmission device 51.

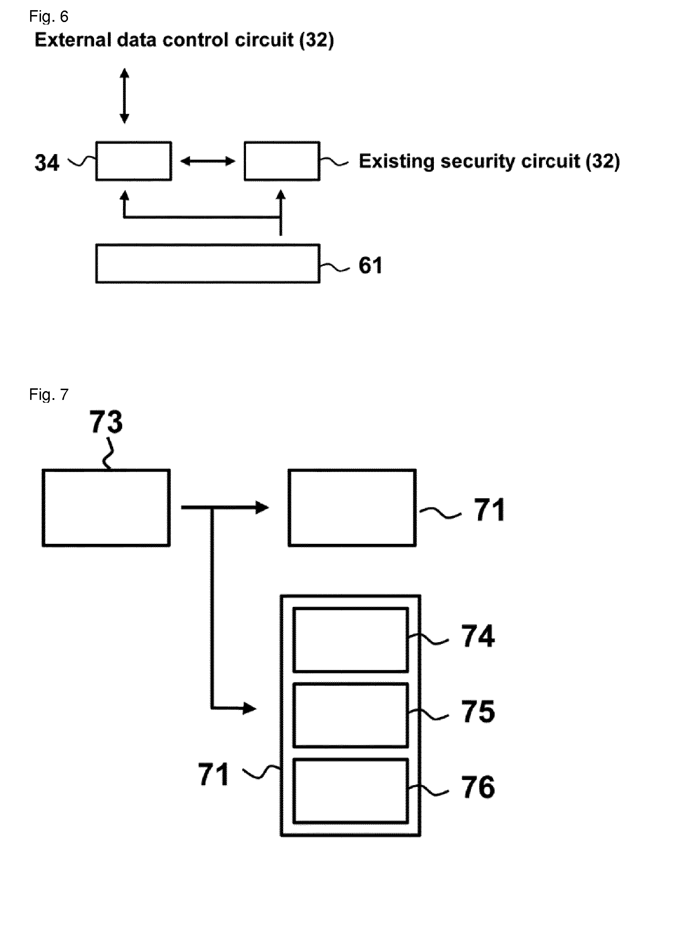

FIG. 6 is a block diagram of the external data control circuit according to an embodiment of the present invention.

As shown in FIG. 6, the external data control circuit 34 includes an external device control module 61 for controlling an external storage device connected to the security-integrated control device and a device in the external data control circuit 34, an external transmission device 62 for receiving data to be checked with respect to the presence of infection of the data by malicious programs from the external storage device controlled by the external device control module 61 and transmitting the received data to the external data storage device 63, and transmitting the data stored in the external data storage device 63 to the existing security circuit 32, and the external data storage device 63 for storing the data transmitted from the external transmission device 62.

The external device control module 61 decides whether or not an external storage device is connected to the CD-ROM driver, floppy disk driver or USB driver connected to the security-integrated control device, accesses data to be checked with respect to the presence of infection of the data by malicious programs, and transmits the accessed data to the external transmission device 62. The external device control module 61 transmits the data of which security disinfection is performed through the existing security circuit 32 to each external storage device.

However, the external device control module 61 checks only the presence of infection of the data by performing only check and search on data in a read-only state, and displays the checked result in the display 11.

The external device control module 61 controls the external transmission device 62 and the external data storage device 63 in the external data control circuit 34 to perform storage, access and transmission operations of the data through a control signal, on behalf of a processing device existing in each circuit.

The external transmission device 62 transmits data transmitted from external storage devices connected to the CD-ROM drivers, the floppy disk drivers and the USB drivers, which are connected to the security-integrated control device, to the external data storage device 63 to store the data. The external transmission device 62 transmits the stored data to the existing security circuit 32 so as to perform security disinfection on the data. The external transmission device 62 receives data, from the existing security circuit 32, data of which security disinfection is performed in the existing security circuit 32 or data of which security disinfection is performed in the new security circuit 33 because the data is not processed in the existing security circuit 32, and stores the received data in the external data storage device 63 or directly transmits the received data to each external storage device.

The external data storage device 63 receives, from the external transmission device 62, data of which security disinfection is to be performed on malicious programs from each external storage device under the control of the external device control module 61, and stores the received data. The external data storage device 63 receives, from the external transmission device 62, data of which security disinfection has been performed by the existing security circuit 32, and stores the received data.

FIG. 7 is a block diagram of the blocking attack security circuit according to an embodiment of the present invention.

As shown in FIG. 7, the blocking attack security circuit 35 includes a blocking device 71 for blocking the Internet when the existing security circuit 32 and the new security circuit 33 are abnormal, an attacking device 72 for performing warning and attack on a computer that attempts an access to the security-integrated control device through the Internet, using a malicious program, and a blocking attack control module 73 for controlling the blocking device 71 and the attacking device 72.

The blocking device 71 blocks external Internet in response to a signal of the blocking attack control module 73 in an urgent situation in which the security disinfection is not performed due to non-operation caused by a power supply problem of the existing security circuit 32 and the new security circuit 33 or abnormal in the circuits.

In a case where data infected by malicious programs transmitted to the security-integrated control device from the external Internet, the existing security circuit 32 and the new security circuit 33 are not operated, and therefore, many computers depending on the security-integrated control device may be infected by the malicious programs. Accordingly, the blocking device 71 urgently blocks the external Internet.

The attacking device 72 includes a warning message transmission device 74 for tracking the address of a malicious computer that accesses a computer connected to the security-integrated control device and causes an error in the operating system of the computer and primarily transmitting a message for warning the malicious computer to stop the malicious action, a blocking attack transmission device 75 for receiving an existing security program stored in the existing security program storage device 43 of the existing security circuit 32 and a new security program stored in the new security program storage device 56 of the new security circuit 33 when the malicious computer continuously attempts the malicious action, and an attack security device 76 for checking and disinfecting data infected by the malicious program stored in the malicious computer when the existing security program or new security program transmitted from the blocking attack transmission device 75 is executed in the malicious computer.

In a case where the existing security circuit 32 and the new security circuit 33 are not driven due to their abnormality, the blocking attack control module 73 controls the blocking device 71 to block data transmitted from the Internet. The blocking attack control module 73 detects data accessing the computer connected to the security-integrated control device through the Internet, using a malicious program, and displays the detected data in the display 11. The blocking attack control module 73 receives an instruction for attack from the surveillant and controls the attacking device 72 to primarily transmit a warning message to an output device of the malicious computer through the warning message transmission device 74 and to secondarily drive the attack security device 76 using the existing security program or new security program transmitted from the blocking defense transmission device 75.

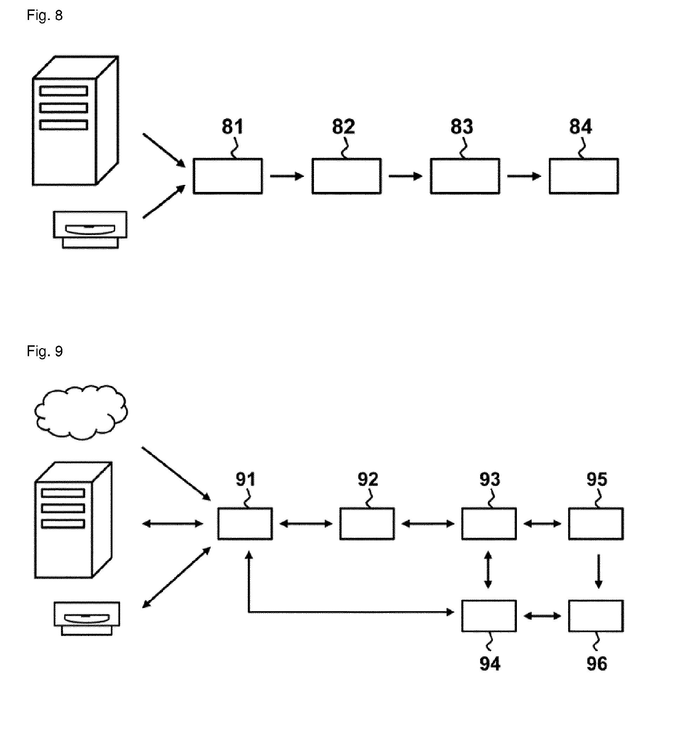

FIG. 8 is a block diagram of the application program analysis circuit according to an embodiment of the present invention.

As shown in FIG. 8, the application program analysis circuit 36 is a circuit that checks and analyzes a malicious program type code that may be unintentionally included in source codes of an application program written by a program developer. The application program analysis circuit 36 includes an application program transmission device 81 for receiving binary codes or source codes of an application program from the external storage device or computer, an application program storage device 82 for storing the binary codes or source codes of the application program, transmitted from the application program transmission device 81, an application program analysis device 83 for analyzing data transmitted from the application program storage device 82, and an output device 84 for outputting a result analyzed by the application program analysis device 83.

The application program transmission device 81 receives binary codes or source codes to be analyzed from the external data storage device 63 for receiving data of the external storage device or the computer connected to the computer cable connector 27, and transmits the received codes to the application program storage device 82.

The application program storage device 82 receives an application program written by a program developer from the external storage device or computer, and stores binary codes or source codes of the application program.

The application program analysis device 83 analyzes binary codes or source codes of each application program stored in the application program storage device 82, and detects code types of malicious programs that may intentionally or unintentionally occur in the application program by comparing the binary codes or source codes with code types of malicious programs stored in the application program analysis device 83. In a case where a code type of a malicious program exists, the application program analysis device 83 transmits the position corresponding to the code type to the output device 84.

The output device 84 outputs information on the code type of the malicious program, detected from the application program analysis device 83, in the display 11 mounted to the security-integrated control device and the monitor connected to the monitor cable connector 29 so as to provide the information to the surveillant and the application program developer.

FIG. 9 is a block diagram of a security-integrated control circuit according to an embodiment of the present invention.

As shown in FIG. 9, the security-integrated control circuit is a circuit obtained by integrating the security patch circuit 31, the existing security circuit 32, the new security circuit 33, the external storage device control circuit 34, the blocking attack security circuit 35 and the application program analysis circuit 36. The security-integrated control unit includes an integrated transmission device 91 for communicating data with the Internet or computer external storage device, an integrated storage device 92 for arbitrarily storing data transmitted from the integrated transmission device 91 and storing data of which security disinfection is performed from the integrated processing device 93, the integrated processing device 93 for loading data from the integrated storage device 92 and performing security disinfection on the data using a security program, a security program integrated storage device 94 for providing a security program required in the integrated processing device 93, a malicious program integrated storage device 95 for storing new malicious programs which are not processed in the integrated processing device 93, a new integrated analysis device 96 for analyzing the malicious programs transmitted from the malicious program integrated storage device 95 so as to write a new solution program or to provide the analyzed malicious programs to a specialist, a circuit reset button for rapidly processing, through hardware, various problems such as a fault and an error, which occur in the circuit, and separately controlling power with respect to a circuit that the surveillant intends not to use, and a circuit checking unit for checking a state of the circuit.

The integrated transmission device 91 receives data transmitted from the computer connected to the computer cable connector 27 or the Internet cable connector 28 or data transmitted from the external storage control circuit 34 that requests security disinfection, and transmits the received data to the integrated storage device 92 for each device. The integrated transmission device 91 receives data stored in the integrated storage device 92 by performing security disinfection on the data in the integrated processing device 93, and transmits the received data to the computer or external storage device connected to the security-integrated control device.

The integrated transmission device 91 receives a security patch program transmitted through the Internet and stores the received program in the integrated storage device 92 so as to perform security disinfection. Then, the integrated transmission device 91 transmits the security patch program to computers connected to the security-integrated control device.

In a case where a malicious computer attempts an access to the security-integrated control device using malicious programs, the integrated transmission device 91 primarily transmits, to the malicious computer, a message for warning the malicious computer to stop the malicious action. In a case where a security program transmitted from the security program integrated storage device 94 is executed in the malicious computer, the integrated transmission device 91 secondarily perform security disinfection on the malicious programs stored in the malicious computer.

The integrated storage device 92 arbitrarily stores data transmitted from the integrated transmission device 91. The integrated storage device 92 transmits the data to the integrated processing device 93 to perform a security process on the data so as to store safe data.

The integrated storage device 92 stores a security patch program transmitted from the integrated transmission device 91 so that the integrated processing device 93 perform security disinfection on the stored security patch program. Then, the integrated storage device 92 patches security of operating systems of computers connected to the security integrated control device.

The integrated processing device 93 loads data stored in the integrated storage device 92 and performs the security program stored in the security program integrated storage device 94 so as to search and check the loaded data. In a case where the data is not infected by a malicious program, the integrated processing device 93 stores the data in the integrated storage device 92. In a case where the data is infected by the malicious program, the integrated processing device 93 perform security disinfection on the data and stores the data of which security disinfection has been performed in the integrated storage device 92. In a case where the data is infected by a new malicious program of which security disinfection is impossible, the integrated processing device 93 stores the corresponding malicious program in the malicious program integrated storage device 95 so as to analyze the malicious program. In a case where a new malicious program is detected, the integrated processing device 93 informs the surveillant of the process of corresponding data through the display 11 and the monitor connected to the monitor cable connector 29 so as to determine whether the data is deleted or included as it is.

The integrated processing device 93 decides whether or not the program transmitted from the integrated storage device 92 is a security patch program. In a case where the program transmitted from the integrated storage device 92 is a security patch program, the integrated processing device 93 performs security disinfection on the security patch program so that the security can stably perform patch for each computer connected to the security-integrated control device.

The integrated processing device 93 primarily generates a message for warning a malicious computer that attempts an access to the security-integrated control device using a malicious program to stop the malicious action. The integrated processing device 93 secondarily loads the security program stored in the security program integrated storage device 94 and transmits the loaded security program to the malicious computer through the integrated transmission device 91.

The security program integrated storage device 94 stores a program for checking and removing programs disguised as vaccine programs that are currently developed by several companies and perform the security disinfection on viruses and programs that remove advertising spyware, and a program for detecting and removing cloaker's actions, particularly, cloaker programs for illegally obtaining programs, certificates, security keys or passwords so as to use other computers as zombie PCs. The security program integrated storage device 94 stores security programs for new malicious programs, which is written by the new integrated analysis device 96 and the specialist with respect to, and provides the security program capable of performing security disinfection on the same malicious program to the integrated processing device 93.

The malicious program integrated storage device 95 does not delete doubtful data that is not processed in the integrated processing device 93 and may be infected by a new malicious program, and stores the new malicious program so that the new integrated analysis device 96 analyzes the new malicious program and performs security disinfection on the new malicious program for the purpose of the use of the new malicious program in the future.

However, since the disinfection of the data stored in the malicious program integrated storage device 95 is impossible, the malicious program integrated storage device 95 does not provide an execution function so that other computers and external storage devices connected to the security-integrated control device are not infected by the executed data, as well as the security-integrated control device.

The new integrated analysis device 96 analyzes whether the new malicious program stored in the malicious program integrated storage device 95 is a virus program, spyware or cloaker program and its configuration. In a case where the writing of a program that can simply perform security disinfection on the new malicious program is possible, the new integrated analysis device 96 automatically writes the program and stores the written program in the security program integrated storage device 94. In a case where a specialist's development of a security disinfection program is necessary, the new analysis device 55 provides information on the new malicious program to a specialist so as to assist the specialist in the development of the security disinfection program.

An embedded device implemented as one circuit by integrating the integrated transmission device 91, the integrated storage device 92, the integrated processing device 93, the security program integrated storage device 94, the malicious program integrated storage device 95 and the new integrated analysis device 96 is preferably hardware-built in a wireless device such as a smart phone so as to be applied to a mobile communication device using wireless communication.

The foregoing is merely an exemplary embodiment of the hacker virus security-integrated control device according to the present invention, and those skilled in the art will understand that various modifications and equivalent other embodiments of the present invention are possible. The scope of the invention is not intended to be limited to the particular forms disclosed and the invention covers all modifications, equivalents, and alternatives falling within the spirit and scope of the invention as defined by the claims.

### Industrial applicability

The present invention relates to a hacker virus security-integrated control device for solving problems that may occur due to viruses, malice programs, etc., using a separate auxiliary device in a security related integrated control system of computers and various devices, and can be applied to industrial fields using computers and software.

### <Legend of Drawings>

FIG. 1 CD 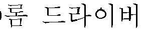 : CD-ROM driver CD 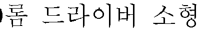 : Small CD-ROM driver 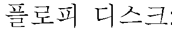 : Floppy disk driver 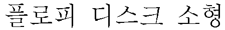 : Small floppy disk driver 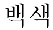 : White 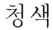 : Blue 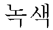 : Green 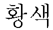 : Yellow 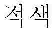 : Red
   19: Power reset 1, internally generated power unit

   20: Power reset 2, internally generated power unit
   21: Power reset 3, internally generated power unit
   24, 25: Cooling fan
FIG. 2 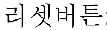 : Reset button 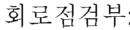 : Circuit checking unit
FIG. 3 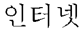 : Internet
   32: Existing security circuit
FIG. 4
   33: New security circuit
FIG. 5
   32: Existing security circuit
FIG. 6
   32: Existing security circuit
   34: External data control circuit

## Claims

1. A hacker virus security-integrated control device, comprising:
an integrated transmission device configured to communicate data with an Internet or computer external storage device;
an integrated storage device configured to arbitrarily store data transmitted from the integrated transmission device and store data of which security disinfection is performed from an integrated processing device;
the integrated processing device configured to load data from the integrated storage device and perform security disinfection on the loaded data using a security program; and
a security program storage device configured to provide a security program requested in the integrated processing device.

2. The hacker virus security-integrated control device according to claim 1, further comprising:
a malicious program integrated storage device configured to store a new malicious program which is not processed in the integrated processing device; and
a new integrated analysis device configured to analysis a malicious program transmitted from the malicious program integrated storage device and write a new solution program or provide the analyzed malicious program to a specialist.

3. The hacker virus security-integrated control device according to claim 1 or 2, further comprising a circuit reset button configured to quickly process trouble caused in a circuit through hardware and separately control power of the circuit.

4. The hacker virus security-integrated control device according to claim 1 or 2, further comprising a circuit checking device configured to check a state of the circuit.

5. The hacker virus security-integrated control device according to claim 3, further comprising a circuit checking device configured to check a state of the circuit.

6. The hacker virus security-integrated control device according to claim 1 or 2, wherein the integrated transmission device receives a security patch program transmitted through the Internet, performs security disinfection on the received security patch program in the integrated processing device and then transmits the security patch program to a plurality of computers connected to the security-integrated control device; the integrated storage device stores a security patch program transmitted from the integrated transmission device, performs security disinfection on the stored security patch program through the integrated processing device and then store the security patch program; and the integrated processing device decides whether or not a program transmitted from the integrated storage device is a security patch program, and performs security disinfection on the security patch program when the program from the integrated storage device is the security patch program.

7. The hacker virus security-integrated control device according to claim 3 or 4, wherein the integrated transmission device receives a security patch program transmitted through the Internet, performs security disinfection on the received security patch program in the integrated processing device and then transmits the security patch program to a plurality of computers connected to the security-integrated control device; the integrated storage device stores a security patch program transmitted from the integrated transmission device, performs security disinfection on the stored security patch program through the integrated processing device and then store the security patch program; and the integrated processing device decides whether or not a program transmitted from the integrated storage device is a security patch program, and performs security disinfection on the security patch program when the program from the integrated storage device is the security patch program.

8. The hacker virus security-integrated control device according to claim 5, wherein the integrated transmission device receives a security patch program transmitted through the Internet, performs security disinfection on the received security patch program in the integrated processing device and then transmits the security patch program to a plurality of computers connected to the security-integrated control device; the integrated storage device stores a security patch program transmitted from the integrated transmission device, performs security disinfection on the stored security patch program through the integrated processing device and then store the security patch program; and the integrated processing device decides whether or not a program transmitted from the integrated storage device is a security patch program, and performs security disinfection on the security patch program when the program from the integrated storage device is the security patch program.

9. The hacker virus security-integrated control device according to claim 1 or 2, wherein the integrated transmission device primarily transmits a warning message to a malicious computer accessing the security-integrated control device using a malicious program, and secondarily transmits a security program transmitted from the security program storage device to the malicious computer; and the integrated processing device primarily generates a message for warning a malicious computer accessing the security-integrated control device using a malicious program, and secondarily loads a security program from the security program storage device and then transmits the loaded security program to the integrated transmission device.

10. The hacker virus security-integrated control device according to claim 3 or 4, wherein the integrated transmission device primarily transmits a warning message to a malicious computer accessing the security-integrated control device using a malicious program, and secondarily transmits a security program transmitted from the security program storage device to the malicious computer; and the integrated processing device primarily generates a message for warning a malicious computer accessing the security-integrated control device using a malicious program, and secondarily loads a security program from the security program storage device and then transmits the loaded security program to the integrated transmission device.

11. The hacker virus security-integrated control device according to claim 5 or 6, wherein the integrated transmission device primarily transmits a warning message to a malicious computer accessing the security-integrated control device using a malicious program, and secondarily transmits a security program transmitted from the security program storage device to the malicious computer; and the integrated processing device primarily generates a message for warning a malicious computer accessing the security-integrated control device using a malicious program, and secondarily loads a security program from the security program storage device and then transmits the loaded security program to the integrated transmission device.

12. The hacker virus security-integrated control device according to claim 7 or 8, wherein the integrated transmission device primarily transmits a warning message to a malicious computer accessing the security-integrated control device using a malicious program, and secondarily transmits a security program transmitted from the security program storage device to the malicious computer; and the integrated processing device primarily generates a message for warning a malicious computer accessing the security-integrated control device using a malicious program, and secondarily loads a security program from the security program storage device and then transmits the loaded security program to the integrated transmission device.

13. A hacker virus security-integrated control device, comprising:
a display configured to briefly display a current progress status of a system device to a user;
an internet cable connector configured to connect the security-integrated control device to an Internet;
a computer cable connector configured to connect a personal computer or server controlled by the security-integrated control device;
a power button configured to supply power to the security-integrated control device;
a circuit connector configured to receive data a computer and an external storage device, connected to the security-integrated control device, and perform security disinfection on the received data; and
an existing security circuit configured to create a reference security program.

14. The hacker virus security-integrated control device according to claim 13, further comprising:
an external storage device driver configured to perform security disinfection on data in the external storage device; and
an external storage device control circuit configured to transmit data in the external storage device to the existing security circuit and a new security circuit so as to perform security infection on the transmitted data, and then transmit the data of which security disinfection is performed to the external storage device.

15. The hacker virus security-integrated control device according to claim 13 or 14, further comprising a security patch circuit configured to patch security of an operating system in the security-integrated control device and a computer connected to the security-integrated control device.

16. The hacker virus security-integrated control device according to claim 13 or 14, further comprising a new security circuit configured to store a new malicious program, analyze the stored new malicious program and perform security disinfection on the analyzed new malicious program.

17. The hacker virus security-integrated control device according to claim 15, further comprising a new security circuit configured to store a new malicious program, analyze the stored new malicious program and perform security disinfection on the analyzed new malicious program.

18. The hacker virus security-integrated control device according to claim 13 or 14, further comprising a blocking attack security circuit configured to block intrusion of an external intruder.

19. The hacker virus security-integrated control device according to claim 15 or 16, further comprising a blocking attack security circuit configured to block intrusion of an external intruder.

20. The hacker virus security-integrated control device according to claim 17, further comprising a blocking attack security circuit configured to block intrusion of an external intruder.

21. The hacker virus security-integrated control device according to claim 13 or 14, further comprising an application program analysis circuit configured to analyze an application program written by a programmer so as to analyze and warning whether or not the malicious program is included in the application program.

22. The hacker virus security-integrated control device according to claim 15 or 16, further comprising an application program analysis circuit configured to analyze an application program written by a programmer so as to analyze and warning whether or not the malicious program is included in the application program.

23. The hacker virus security-integrated control device according to claim 17 or 18, further comprising an application program analysis circuit configured to analyze an application program written by a programmer so as to analyze and warning whether or not the malicious program is included in the application program.

24. The hacker virus security-integrated control device according to claim 19 or 20, further comprising an application program analysis circuit configured to analyze an application program written by a programmer so as to analyze and warning whether or not the malicious program is included in the application program.
